# EUROPÄISCHE PATENTSCHRIFT

(11) **EP 4 028 674 B1**
(45) Veröffentlichungstag und Bekanntmachung des Hinweises auf die Patenterteilung: **27.11.2024**
(21) Anmeldenummer: 20767957.2
(22) Anmeldetag: 20.08.2020
(51) Int. Cl.: F16D 13/68, F16D 13/70

(54) **TRENNKUPPLUNG MIT EINSTELLBARER RÜCKSTELLFEDERAUFLAGE, ANTRIEBSSTRANG UND VERFAHREN ZUM EINSTELLEN DER FEDERKRAFT EINER RÜCKSTELLFEDER EINER TRENNKUPPLUNG**
DISCONNECT CLUTCH COMPRISING ADJUSTABLE RETURN SPRING SEAT, DRIVE TRAIN, AND METHOD FOR ADJUSTING THE SPRING FORCE OF A RETURN SPRING OF A DISCONNECT CLUTCH
EMBRAYAGE DE COUPURE À SIÈGE DE RESSORT DE RAPPEL RÉGLABLE, CHAÎNE CINÉMATIQUE ET PROCÉDÉ DE RÉGLAGE DE LA FORCE DE TENSION D'UN RESSORT DE RAPPEL D'UN EMBRAYAGE DE COUPURE

(30) Priorität: 10.09.2019 DE 102019124192
(43) Veröffentlichungstag der Anmeldung: 20.07.2022
(73) Patentinhaber: Schaeffler Technologies AG & Co. KG, 91074 Herzogenaurach (DE)
(72) Erfinder: HURLE, Thomas, 77830 Bühlertal (DE); KELLER, Aurelie, 67850 Herrlisheim (FR); AGNER, Ivo, 77815 Bühl (DE)
(86) Internationale Anmeldenummer: PCT/DE2020/100729
(87) Internationale Veröffentlichungsnummer: WO 2021/047715

(56) Entgegenhaltungen:
- WO-A1-2018/054411
- WO-A1-2018/054411
- DE-A1- 102017 130 481
- DE-A1- 102017 130 481
- DE-A1- 102018 129 257
- DE-A1- 102018 129 257
- FR-A1- 3 079 573
- FR-A1- 3 079 573

## Beschreibung

Die Erfindung betrifft eine Trennkupplung nach Art einer Mehrscheibenkupplung oder Lamellenkupplung, bspw. als direkt betätigte trockene (Einzel-)Trennkupplung für einen Antriebsstrang eines Kraftfahrzeugs, mit einem Außenlamellenträger, in dem drehfest, aber axial verlagerbar Reibscheiben, die Außenlamellen, bspw. ausgebildet als Stahllamellen, einlegbar sind, welche bei vollständigem oder teilweise vorliegendem Kraftschluss mit Gegenreibscheiben, wie Innenlamellen, bspw. ausgebildet als Belaglamellen, zum Drehmomentweitergeben vorbereitet sind, wobei der Außenlamellenträger, bspw. über eine Vernietung, Verschraubung oder Verschweißung, dreh-und axialfest an einem Drehmomentweitergabebauteil, wie einer Nabe, befestigt ist, wobei ein Anpresselement, etwa nach Art eines Drucktopfes oder eines Hebels, zum Axialverschieben wenigstens einer der Reibscheiben für den Kraftschlussfall vorhanden ist, wobei das Anpresselement mit einer Rückstellfeder in Kontakt steht, die zum Aufheben des Kraftschlusses vorgesehen ist.

Durch die Anforderungen in der Hybridisierung werden die Kupplungsanforderungen dahingehend verschärft, dass sie selbst bei kleineren Durchmessern und höheren Drehzahlen trotzdem ihre volle Funktionalität erbringen müssen. Dies gilt nicht nur für das Drehmomentübertragen der Kupplung, sondern auch für andere Bauteile in der Kupplung. Somit muss eine kleine Rückstellfeder in der Kupplung mit vergleichbarer Lamellenzahl, genauso wie eine große Kupplung, den gleichen Lüftweg / Einrückweg überwinden.

Eine Mindestkraft ist notwendig, da zum Überwinden einer Krafthysterese des Einrücksystems und zur Erfüllung der Dynamikanforderungen beim Zurückdrücken des Einrücksystems dieser Kraftbereich benötigt wird. Da bei einer kleinen Kupplung die benötigte Kraft in Einbaulage jedoch nicht kleiner werden soll, sondern auf ähnlichem Niveau bleiben soll, bedeutet dies, dass man einen Kraftrand jener bspw. als Tellerfeder ausgebildeten Rückstellfeder nicht beliebig klein gestalten kann. Hielte man den Kraftrand jedoch vom Durchmesser her groß, würde dies die Bauraumgegebenheiten bei modernen Hybridanordnungen sprengen. Auch könnte man den Drehzahlanforderungen nicht gerecht werden, was in einer verringerten Lebensdauer gipfeln würde. Die besagten Probleme werden insbesondere bei einer Ankopplung von Elektromotoren verschärft, da dort besonders hohe Umfangsgeschwindigkeiten und hohe Drehzahlen vorliegen.

Es gibt bekannte Doppelkupplungsanordnungen, in denen sich die Rückstellfeder zwischen dem Drucktopf und der einrückkraftabstützenden Einheit befindet. In diesem Zusammenhang sei bspw. auf die WO 2015/144161 A1 verwiesen, die eine direkt betätigte trockene Kupplung offenbart. Diese Druckschrift offenbart unter anderem eine Reibungskupplungseinrichtung mit mindestens einer Druckplatte und einer Gegendruckplatte, und mit mindestens einer Blattfedereinrichtung, die mit einer Einstelleinrichtung kombiniert ist, wobei als Besonders herausgestellt ist, dass die Einstelleinrichtung als Toleranzausgleichseinrichtung ausgeführt ist, die einen Toleranzausgleich der Reibungskupplungseinrichtung in ihrer Einbaulage ermöglicht.

Als weiterer Stand der Technik wird auf die DE 10 2018 129 257 A1, die DE 10 2017 130 481 A1 und die WO 2018/054 411 A1 verwiesen.

Es hat sich gezeigt, dass häufig Brüche bei Rückstellfedern auftreten. Dies gilt es abzustellen.

Bei einer gattungsgemäßen Trennkupplung wird dies erfindungsgemäß dadurch gelöst, dass die Rückstellfeder radial außen in einem Auflagebereich des Drehmomentweitergabebauteils (direkt oder indirekt) anliegt, wobei der Auflagebereich zur Veränderung der Vorspannung der Rückstellfeder ausgelegt ist.

Durch die erhöhte Kraft/Weg-Belastung aufgrund der kleineren Durchmesser der Rückstellfedern, nehmen die Mittelspannungen bei Rückstellfedern zu. Dies hat einen direkten Einfluss auf die Festigkeit und auf die Lebensdauer der Feder. Es wird somit hier gezielt gegengewirkt. Während bei Lamellenkupplungen bisher überhaupt keine Krafteinstellung an der Rückstellfeder bei eingestelltem Lüftweg realisiert ist, wird dies über ein Lüftwegeinstellen hinaus realisiert. Auch bleiben die üblichen Varianten des Einlegens einer Shim zwischen einem Einrücksystem und einer Trennkupplung zum Ausgleich von Systemtoleranzen möglich. Unter einer Shim wird, wie üblich, eine Abstimmscheibe oder Toleranzausgleichsscheibe verstanden. Die Einbaulage der Kupplung wird dann auf das Einrücksystem geschickt angepasst. Die Kupplungen des Einrücksystems werden also im Gesamtzusammenbau aufeinander abgestimmt und der erforderliche Lüftweg der Kupplung wird sichergestellt. Darüber hinaus wird nun jedoch auch die Kraft, welche von der Rückstellfeder abrufbar ist, eingestellt. Auch eine weitere Variante, die vom Grundsatz bzgl. des Ausgleichs von Toleranzen bekannt ist, nämlich das Vorsehen einer unterschiedlichen Reibscheibe / Reiblamelle / Stahllamelle, vorzugsweise jener, die einem Anpresselement nächstgelegen ist, bleibt möglich. Durch das Vorhalten von einer Einstellmöglichkeit am radial inneren Ende der Rückstellfeder und am radial äußeren Ende der Rückstellfeder, wird einerseits somit eine Axialtoleranz ausgeglichen und andererseits die Lage der Rückstellfeder angepasst. Gerade für direkt betätigte trockene Kupplungen bietet sich dies an, da die Krafteinstellung in der Einbaulage vorgenommen wird. Es wird auch kein zusätzliches Einstellstück benötigt, welches zu verbiegen ist, um die Vorspannung im montierten Zustand zu variieren. Dies ist ein erheblicher Vorteil gegenüber dem Stand der Technik, bspw. der WO 2015/144 161 A1.

Die Einbaulage der Trennkupplung bei einem fixen Lüftweg festgelegt ist. Es wird durch die Paarung der Einbaulage der Trennkupplung und durch die Einbaulage des Einrücksystems mit Hilfe der "Shimung" - also dem Einlegen einer Shim an gewünschter Stelle - einerseits die Lage sichergestellt und andererseits mit dem gezielten Verändern des Auflagebereiches die Kraft eingestellt. Je nach Toleranz der Einzelteile ergibt sich zwar eine unterschiedliche Vorspannhöhe für die Rückstellfeder in ihrer Einbaulage und somit auch eine unterschiedliche Kraft in der Einbaulage der Trennkupplung, doch dies wird nun kompensiert. Der kleine Federdurchmesser, die gleichbleibende Mindestkraftanforderung in der Einbaulage, kombiniert mit den geometrischen Einzeltoleranzen, führt nun nicht mehr zu einer höheren Belastung in der Rückstellfeder, was der Lebensdauer der Feder zuträglich ist. Es ist somit eine Möglichkeit gefunden worden, um nach dem Einstellen des Lüftwegs auch die Kraft der Rückstellfeder gezielt einzustellen. Dadurch wird die Krafttoleranz und somit der Weg / Arbeitsbereich der Feder reduziert und die Langlebigkeit der Feder gewährleistet. Mit anderen Worten wird man somit endlich den zwei grundlegenden Einstellaufgaben gerecht, einerseits durch das Verwenden einer Shim und/oder unterschiedlichen Lamellen und andererseits durch die Axiallagerveränderung des Auflagebereichs und somit die Veränderung des Auflagepunktes am radial äußeren Ende der bspw. als Tellerfeder ausgestalteten Rückstellfeder.

Der Kerngedanke der Erfindung besteht also darin, dass sich die Auflageposition der Rückstellfeder plastisch verformen lässt. So kann ein Toleranzausgleich für die Kraft in Einbaulage der Kupplung realisiert werden. Dies ist möglich, da die Auflagenocken der Feder nach der Montage der Kupplung immer noch gut zugänglich sind und so gestaltet sind, dass sie mit wenig Kraftaufwand umgeformt werden können. Im Vordergrund steht somit die Veränderung der Vorspannung eines Rückstellelementes nach eingestelltem Lüftweg, ein Verbiegen eines Auflagebereichs und/oder ein Einlegen eines Elementes.

Vorteilhafte Ausführungsformen sind in den Unteransprüchen beansprucht und werden nachfolgend näher erläutert.

So ist erfindungsgemäß wenn der Auflagebereich von einem radial nach außen abstehenden Auflagenocken gestellt ist, der zum umformenden Verlagern bei einem Einstellvorgang der Federrückstellkraft der Rückstellfeder vorbereitet ist oder zur Aufnahme einer Shim vorbereitet ist. Die Lage der Rückstellfeder bleibt unabhängig von den Toleranzen und des bspw. radial innen an der Rückstellfeder anliegenden Shims dadurch. Durch das Umformen des Auflagenockens wird der Aufstellwinkel der Rückstellfeder reduziert, womit die Vorspannung der Rückstellfeder gegenüber der Belastung reduziert wird, ohne dabei jedoch die Mindestkraftanforderung zu unterschreiten. Der Auflagenocken ist somit vorbereitet für ein nachträgliches Plastifizieren / Richten. Dies bedingt eine Einstellbarkeit der Federkraft. Der Federauflagebereich kann einstückig ausgebildet sein, jedoch auch mehrteilig realisiert werden. Die Federauflage ist immer direkt oder indirekt mit dem Lamellenträger verbunden.

Wenn der Auflagebereich für einen radial nach außen abstehenden Auflagenocken gestellt ist, der zum umformenden Verlagern bei einem Einstellvorgang der Federrückstellkraft der Rückstellfeder vorbereitet ist, kann also durch einen simplen in einer Richtung wirkenden spanlosen Bearbeitungsvorgang die Position und dadurch Kraft der Rückstellfeder schnell und kostengünstig eingestellt werden. Alternativ ist auch eine sonst übliche Nutzung von Shims an dieser Stelle möglich, nämlich dann, wenn der Auflagebereich zur Aufnahme einer solchen Shim vorbereitet ist. Die Lage der Feder bleibt dann unabhängig von den Toleranzen und der bspw. radial innen an der Feder anliegenden Shims.

In einer der Erfindung ähnlichen Ausführungsform hat es sich bewährt, wenn auf der reibscheibenabgewandten Oberfläche des Auflagenockens ein Keil ausgebildet ist, der eine Rampe aufweist, die zu einem in einer Axialebene verlaufenden Plateau führt, wobei die Axialebene eine solche Ebene ist, durch die die Rotationsachse der Trennkupplung senkrecht verläuft. Die Rückstellfeder kann dann sauber positioniert werden.

Eine erfindungsgemäße Ausführungsform ist auch dadurch gekennzeichnet, dass der Auflagenocken in Umfangsrichtung an zwei Ausnehmungen im Material des als Nabe ausgebildeten Drehmomentweitergabebauteils grenzt. Ein präzises Verbiegen des Auflagenockens, ohne Risse, welche die Dauerfestigkeit beeinträchtigen würde, wird dann erleichtert.

Ferner ist es möglich, die Ausnehmungen an deren radial innenseitigen Enden aufeinander zu ausgerichtet zu lassen, sodass eine Sollbiegestelle vorgegeben wird.

Es hat sich somit bewährt, wenn die innenseitigen Enden eines Verbiegebereiches Auflagenocken vordefinieren.

Eine bevorzugte Ausführungsform ist auch derart gestaltet, dass die Ausnehmungen an die Kontur eines Sockens oder eines Kinderfußes angelehnt sind oder ihr entsprechen.

Die Variantenvielfalt kann besonders kundengerecht ausgestaltet werden, wenn der Auflagebereich einstückig / einteilig oder mehrstückig / mehrteilig ausgebildet ist.

Die Erfindung betrifft auch einen Antriebsstrang eines Kraftfahrzeugs mit einer erfindungsgemäßen Trennkupplung, wenn sie zwischen zwei Elektromotoren eingesetzt ist. Besonders hier spielt die Erfindung ihren großen Vorzug aus, nämlich beim zielgerichteten Reagieren auf die gerade bei Elektromotoren vorliegenden extrem hohen Drehzahlen und Umfangsgeschwindigkeiten.

Letztlich betrifft die Erfindung auch ein Verfahren zum Einstellen der Federkraft einer Rückstellfeder einer Trennkupplung, bspw. der erfindungsgemäßen Art, wobei nach einem Einstellen des Lüftweges der Trennkupplung ein radial außenseitiger Kraftübertragungsbereich zwischen einem Drehmomentweiterleitbauteil und der Rückstellfeder axial verlagert wird.

Diese erfinderische Idee kann weitergebildet werden, wenn die axiale Verlagerung vor dem Betrieb durch Verbiegen eines / des Auflagenockens bewirkt wird oder durch Zwischenschalten einer Shim zwischen dem Auflagenocken und der Rückstellfeder bewirkt wird.

Um besonders kompakte Trennkupplungsausführungsformen zu ermöglichen, bietet sich auch eine Weiterbildung an.

Es ist ferner für eine Weiterbildung die Aufgabe, die Nachteile aus dem Stand der Technik abzustellen oder wenigstens zu mildern. Insbesondere soll eine Trennkupplung für den Einsatz bei angrenzenden Bauteilen mit besonders hohen Umfangsgeschwindigkeiten und hohen Drehzahlen möglich werden, ohne aber Defizite in der Lebensdauer der einzelnen Teile hinnehmen zu müssen. Insbesondere soll in der Weiterbildung der Bauraum effizienter genutzt werden.

Diese Aufgabe wird bei einer beispielsweise gattungsgemäß ausgestalteten Trennkupplung dadurch gelöst, dass die Rückstellfeder das Anpresselement von einer reibscheibenabgewandten Seite her in Richtung der Reibscheiben durch- und hintergreift, um mit dem Anpresselement einen Formschluss einzugehen.

Selbst bei besonders hohen Anforderungen an den Bauraum und schwierigen Geometrieverhältnissen muss nun nicht mehr eine Verletzung der Bauraumkonturen hingenommen werden. Es muss nun nicht mehr zwingend so sein, dass der Drucktopf die Rückstellfeder mit seinen Füßen umschließt. Bei erfindungsgemäßer Abweichung von der bekannten klassischen Anordnung ragt der Drucktopf nicht über die Rückstellfeder. Vielmehr ist die Rückstellfeder mit Hilfe von Rückdrückfüßen in dem Drucktopf eingedreht, damit die Rückstellfeder als letztes und größtes Teil verbaut werden kann und die Rückstellfeder das Anpresselement / den Drucktopf trotzdem zurückdrücken kann. Somit ist die Rückstellfeder hinter dem Anpresselement / dem Drucktopf mit Auflage auf die einrückkraftabstützende Bauteileinheit / die Nabe eingedreht. Der Drucktopf steht in Axialrichtung also nicht über die Rückstellfeder über.

Vorteilhafte Ausführungsformen der Weiterbildung sind nachfolgend näher erläutert.

So ist es von Vorteil, wenn der Formschluss einerseits über das (direkte oder indirekte) Anliegen eines integralen Abschnitts der Rückstellfeder an dem Anpresselement oder eines integralen Abschnitt des Anpresselementes an der Rückstellfeder erreicht ist oder andererseits der Formschluss über das Anliegen der Rückstellfeder an einem Zwischenbauteil, wie einem Ring, das seinerseits an dem Anpresselement anliegt, erreicht ist. Wenn der integrale Abschnitt der Rückstellfeder an dem Anpresselement anliegt oder, vice versa, der integrale Abschnitt des Anpresselementes an der Rückstellfeder anliegt, so wird besonders wenig Bauraum in Axialrichtung benötigt und wenig Einzelbauteile sind von Nöten. Dies erleichtert die Montage und verringert die Herstellkosten. Eine besonders große Variabilität an Ausführungsformen und ein Vorhalten eines Baukastens wird dann erleichtert, wenn die Alternative über das Zwischenbauteil realisiert ist.

Es hat sich bewährt, wenn der integrale Abschnitt zumindest abschnittsweise in Umfangsrichtung ausgerichtet ist. Ein simples axiales Zusammenschieben der Einzelbauteile mit einem nachfolgenden Eindrehen zum Hervorrufen des Hintergriffs und Formschlusses ist dann ähnlich wie in einer Bajonettverschlusslösung erreichbar. Dies erleichtert die Montage und macht eine Demontage möglich.

Wenn das Anpresselement als Drucktopf oder Hebel ausgebildet ist und/oder das Drehmomentweitergabebauteil als Nabe ausgebildet ist, so lassen sich gerade für Pkws und Nutzfahrzeuge geeignete Standardlösungen erarbeiten und umsetzen. Wenn zusätzlich oder alternativ das Drehmomentweitergabebauteil zum Abstützen einer Einrückkraft genutzt ist, die zum Hervorrufen eines Axialverlagerns des Drucktopfes beim Bewirken des Kraftschlusses eingesetzt ist, wird eine gute Funktionalität über die Zeit hinweg, selbst bei schwierigen Betriebsbedingungen, gewährleistet.

Um ausreichend Kraft von der Rückstellfeder abrufen zu können, ist es von Vorteil, wenn die Rückstellfeder radial außen in einem vordefinierten Auflagebereich der Nabe an dieser anliegt, vorzugsweise im Bereich des Teilkreises, an welchem der Außenlamellenträger mit der Nabe verbunden ist, weiter vorzugsweise in einem Bereich der dort vorhandenen Vernietung.

Wenn der integrale Abschnitt der Rückstellfeder als freies hakenförmiges Ende eines nach radial innen abstehenden Flansches der Rückstellfeder ausgebildet ist, so kann während der Montage durch Eindrehen der Rückstellfeder relativ zur Nabe und zum Drucktopf einfach der Formschluss zwischen dem Drucktopf und der Rückstellfeder bewirkt werden. Eine besonders montagefreundliche Ausführungsform ist dann die Folge.

Eine besonders kompakte Ausführungsform ergibt sich dann, wenn einerseits der Auflagebereich der Nabe mit der Rückstellfeder, ein Auflagebereich des Drucktopfes mit der Rückstellfeder und die Rückstellfeder selbst geometrisch sowie andererseits die Rückstellfeder in puncto ihres Kraftvermögens so ausgelegt ist, dass ein reibscheibenfernster Teil der Rückstellfeder in allen Betriebszuständen reibscheibenseitig des reibscheibenfernsten Abschnittes des Drucktopfes angeordnet ist.

Um ein ungewolltes Beginnen einer Demontage zu vermeiden, ist es von großem Vorteil, wenn eine Verdrehsicherung für die Rückstellfeder vorgesehen ist, bspw. unter Hervorrufen einer Flankenzentrierung. Zur Verdrehsicherung ist auszuführen, dass eine Position der Rückstellfeder nach dem Eindrehen rotatorisch gesichert werden sollte, um das Herausdrehen der Feder zu verhindern. Bevorzugt wird eine Nietverbindung gewählt. Es kann jedoch auch eine Biegeoperation genutzt werden, welche auf eine herausstehende Nase / einen herausragenden Lappen einwirkt. Der Niet hat in diesem Zusammenhang nicht nur die Funktion des Herausdrehens zu sichern, sondern er verbindet durch seine Doppelfunktion gleichzeitig die Nabe mit dem Außenlamellenträger. Durch die bolzenartige Gestaltung des Niets wird gleichzeitig die Feder über die Flügelaussparungen zentriert. Bei Realisation der Transportsicherung ist auch kein weiteres Bauteil notwendig, was von großem Vorteil ist. So genannte TwinDrive-Getriebe lassen sich dann geschickt umsetzen.

Dabei hat es sich bewährt, wenn die Verdrehsicherung durch einen bspw. bolzenartigen Niet hervorgerufen ist, der an nach radial außen verlaufenden Lappen der Rückstellfeder anliegt oder durch wenigstens einen umgeformten und in einem Formschluss mit dem Drehmomentweitergabebauteil gebrachten Zustand gebrachten Lappen der Rückstellfeder hervorgerufen ist. Da der Lappen ein Blechabschnitt ist, bietet sich eine spanlose, bspw. tiefziehende, bördelnde oder biegende Bearbeitung an. Hohe Taktzeiten und geringe Ausschussraten / minimale Abfallraten sind dann die Folge.

Es hat sich ferner bewährt, wenn der Niet auch die Vernietung des Außenlamellenträgers mit dem Drehmomentweitergabebauteil realisiert.

Die Weiterbildung betrifft auch einen Antriebsstrang eines Kraftfahrzeugs, bei dem eine Trennkupplung der erfindungsgemäßen Art zwischen zwei Elektromotoren eingesetzt ist.

Auch betrifft die die Weiterbildung ein Verfahren zum Montieren einer Trennkupplung, die vorzugsweise erfindungsgemäße ausgestaltet ist, wobei eine Rückstellfeder für ein reibscheibenverlagerndes Anpresselement in eine vormontierte Kupplung, vorzugsweise als letztes / überwiegend reibscheibenfernstes / überwiegend außenliegendstes Bauteil, das Anpresselement durchgreifend eingesetzt / eingelegt wird, dann vorgespannt wird und in direkte oder indirekte Anlage mit dem Anpresselement eingedreht wird, um nämlich mit diesem einen Formschluss einzugehen, bspw. mittels eines Hintergreifens.

Mit anderen Worten ist somit der Kern der Weiterbildung darin zu sehen, dass die Rückstellfeder in das Anpresselement / das Aktivierungselement (bspw. als Drucktopf oder Hebel ausgebildet) formschlüssig eingedreht wird. Hierbei kann der Haken an der Rückstellfeder oder am Anpresselement vorhanden sein. Als Alternative zum Eindrehen könnte auch ein Zusatzelement die Feder nachträglich abstützen, bspw. wenn ein Sicherungsring, ein verpresstes Zusatzteil, ein vernietetes Zusatzteil bzw. ein Niet ohne Zusatzteil gesetzt würde. Die besonders bevorzugte Variante ist jedoch ein Flansch zwischen dem Anpresselement und der Rückstellfeder mit einem Haken an der Rückstellfeder und bereits erläuterter Eindrehung der Rückstellfeder.

Diese Idee wird weitergebildet durch das Vorhalten einer formschlüssigen Verdrehsicherung über einen Niet oder Lappen, wobei der Lappen umformbar ist, und zwischen dem Niet und dem Lappen einerseits und der Rückstellfeder andererseits eine Flankenzentrierung erzwungen wird.

Bei Umsetzung einer Vernietungsverdrehsicherung ist auch eine Dreifachfunktion realisierbar, nämlich derart, dass der Niet den Außenlamellenträger und die Nabe miteinander verbindet sowie die Verdrehsicherung über eine Flankenzentrierung an der Rückstellfeder umsetzt. Theoretisch denkbar ist es auch, dass jener Niet eine axiale Befestigung an der radialen Außenseite der Rückstellfeder umsetzt. Ein einfaches Anliegen der Rückstellfeder ist jedoch der übliche Fall.

Die Erfindung wird nachfolgend mit Hilfe einer Zeichnung näher erläutert. Es zeigen:
- Fig. 1: einen Längsschnitt durch eine erfindungsgemäße Trennkupplung,
- Fig. 2: eine perspektivische Ansicht der Trennkupplung aus Fig. 1, mit als Verdrehsicherung wirkendem eingesetztem Niet zwischen zwei Lappen der Rückstellfeder,
- Fig. 3: einen Längsschnitt durch einen Abschnitt eines erfindungsgemäßen Antriebsstrangs, in dem die Ausführungsform der Trennkupplung der Fign. 1 und 2 eingesetzt ist,
- Fig. 4: eine Draufsicht auf die Trennkupplung der Fign. 1 bis 3, wobei Rückdrückfüße der Rückstellfeder in Aussparungen einer Nabe ragen, um sie durch ein Fenster betätigen zu können und sie dann hinter Drucktopffüße einschnappen lassen zu können,
- Fig. 5: einen Längsschnitt entlang der Linie V aus Fig. 4 zum Zeitpunkt vor Verdrehen der Rückstellfeder und Hervorrufen des Hintergriffes / Formschlusses, wobei die Rückstellfeder soweit betätigt / vorgespannt ist, um die Rückdrückfüße der Rückstellfeder hinter dem Drucktopf einschnappen lassen zu können,
- Fig. 6: ein den Montagezeitpunkten der Fign. 4 und 5 nachgelagerter Montagezeitpunkt, zu welchem die Trennkupplung in einer zur Fig. 4 vergleichbaren Darstellungsweise wiedergegeben ist, wobei jedoch nun nach verdrehter Rückstellfeder, die Position der Rückstellfeder über einen Niet gesichert ist, zu dem alternativ jedoch auch eine Biegeoperation eines herausstehenden Teils einer Nase zu Verfügung stünde,
- Fig. 7: die Trennkupplung aus Fig. 1 in einem Transportzustand, der im Betrieb niemals vorliegt, wobei aufgrund der Federeigenschaft der Rückstellfeder sich diese in einer kraftfreien Position befindet, in welcher der Drucktopf gegen die Nabe gedrückt ist, wodurch sich eine Transportsicherung einstellt und die Kupplung als Gesamtheit handhabbar ist,
- Fig. 8: eine detailliertere Längsschnittdarstellung der Ausführungsform der Trennkupplung aus Fig. 1, wobei ein konstantzuhaltender Lüftweg markiert ist sowie ein durch Verbiegen variabel gehaltener Versatz / Lage / Position der Rückstellfeder dargestellt ist, um einen Toleranzausgleich bei Feineinstellung der Rückstellkraft zu ermöglichen,

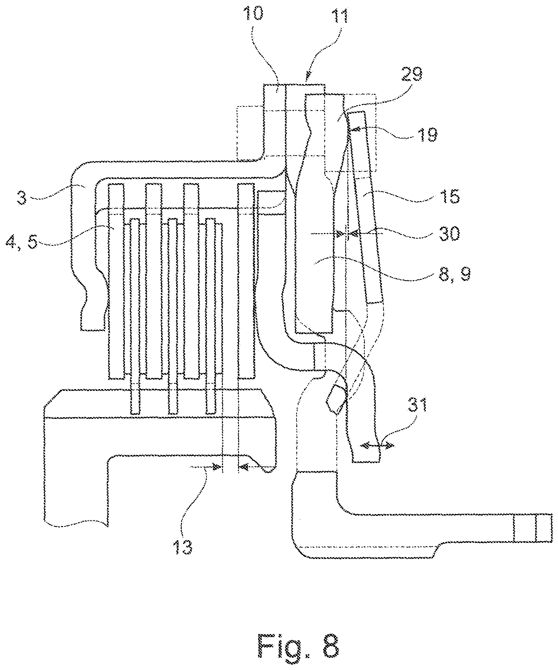

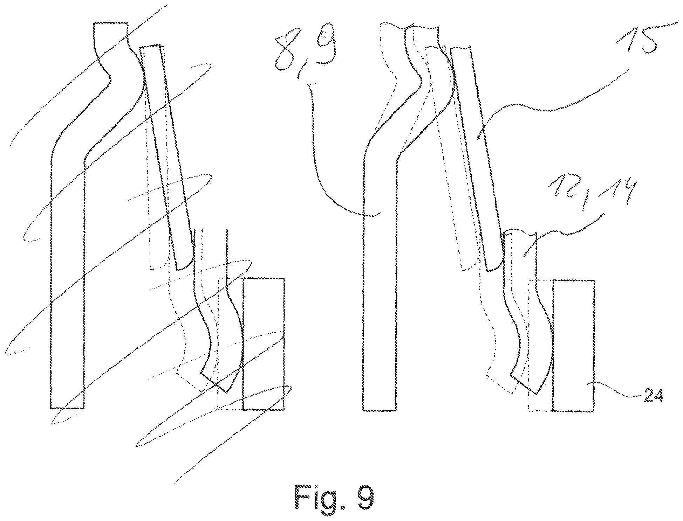

- Fig. 9: ein Ausschnitt aus Fig. 8 auf einem jeweiligen Abschnitt der Nabe, der Rückstellfeder des Drucktopfes und eine Shim zum Zeitpunkt vor dem Einstellen der Rückstellfederkraft und nach dem Einstellen der Rückstellfederposition, wobei durch Verbiegen des Auflagenockens eine im Betrieb zu starke Belastung der Rückstellfeder verhindert wird, ohne dann aber die geforderte Mindestkraft zu unterschreiten, wobei die ungerichtete Höhe der maximalen Toleranzlage entspricht, und somit sichergestellt wird, dass das Verbiegen immer nur in einer Richtung erfolgen kann, wobei immer gleiche Kraftbedingungen für die Rückstellfeder wirken, also immer die gleiche Federbelastung vorliegt.
- Fig. 10: eine Draufsicht auf das als Nabe ausgebildete Drehmomentweitergabebauteil und einen freigestellten Auflagenocken zum nachträglichen Plastifizieren / Richten der Federkraft und.

Die Figuren sind lediglich schematischer Natur und dienen nur dem Verständnis der Erfindung. Die gleichen Elemente sind mit denselben Bezugszeichen versehen.

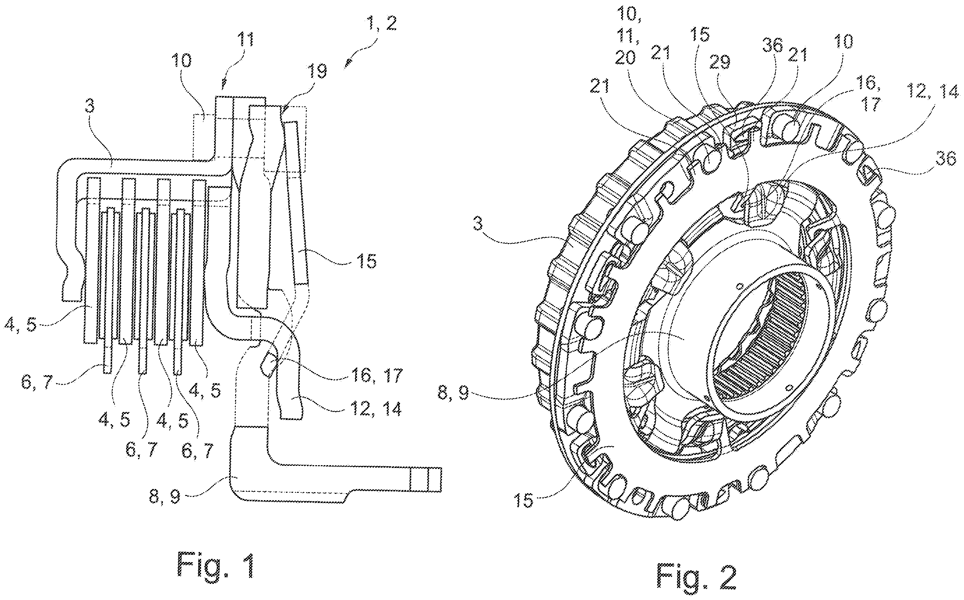

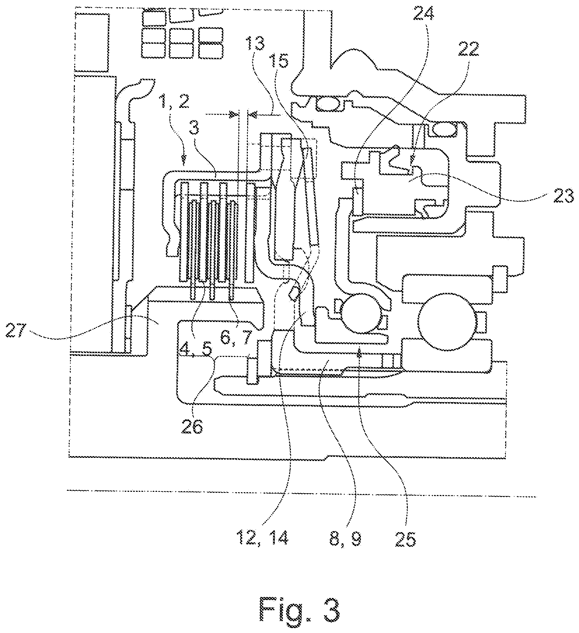

In Fig. 1 ist eine erste Ausführungsform einer Trennkupplung 1 dargestellt. Die Trennkupplung 1 ist als Lamellenkupplung 2 ausgebildet und besitzt einen Außenlamellenträger 3. Der Außenlamellenträger 3 nimmt Reibscheiben 4 auf, die als Stahllamellen 5 ausgebildet sind. Diese wirken mit Gegenreibscheiben 6 zusammen, welche als Belaglamellen 7 ausgebildet sind. Die Belaglamellen 7 sind mit einem nicht dargestellten Koppelbauteil 27 (siehe Figur 3) drehfest verbunden.

Liegt ein Kraftschluss zwischen den Stahllamellen 5 und den Belaglamellen 7 vor, wird Drehmoment von einem Drehmomentweitergabebauteil 8, das als Nabe 9 ausgebildet ist, an das Koppelbauteil weitergegeben, da der Außenlamellenträger 3 über einen nur angedeuteten Niet mit der Nabe 9 verbunden ist (siehe Figur 1). Der Niet hat das Bezugszeichen 10. Er realisiert eine Vernietung 11. Der Kraftschluss wird hervorgerufen, wenn ein Anpresselement / Aktivierungselement 12 zum Druck übertragend auf die ihm nächstgelegene Reibscheibe 4 einwirkt.

Sobald ein Lüftweg 13, wie in Fig. 8 angedeutet, überwunden ist, wird ein vollständig oder teilweise vorliegender Kraftschluss zwischen den Reibscheiben 4 und den Gegenreibscheiben 6 zur Drehmomentübertragung hervorgerufen. In Fig. 1 ist der Augenblick kurz vor Erreichen des Kraftschlusses dargestellt. Das Anpresselement 12 kann als Hebel, oder wie in der Ausführungsform der Fign. 1 bis 10 dargestellt, als Drucktopf 14 ausgestaltet sein.

Eine Rückstellfeder 15 durchgreift und hintergreift das Anpresselement 12. Die Rückstellfeder 15 weist dabei einen integralen Abschnitt 16 auf, welcher am radial innenseitigen Ende vorhanden ist. Dieser integrale Abschnitt 16 verläuft zumindest abschnittsweise in Umfangsrichtung, was gut in Fig. 2 zu erkennen ist. Dieser integrale Abschnitt 16 formt somit ein Rückdrückfuß aus. Man könnte auch sagen, dass der integrale Abschnitt 16 einen Haken 17 ausbildet.

In den Fign. 1 und 2 sieht man, dass jener Haken 17 bei nach der Montage eingedrehtem / in Umfangsrichtung rotiertem Zustand der Rückstellfeder 15 relativ zu dem Anpresselement 12 / dem Drucktopf 14 in Anlage an Drucktopffüße / Drucktopflaschen geraten ist. Es wird ein Hintergriff erzwungen. Dies ruft einen Formschluss zwischen der Rückstellfeder 15 und dem Drucktopf 14 hervor. Die in Fig. 1 dargestellte Rückstellfeder 15 ist schon vorgespannt und liegt mit ihrer radialen Außenseite an einem Auflagebereich 19 der Nabe 9 im Bereich der Vernietung 11 an.

Wenigstens drei der Nieten 10 haben aber eine Sonderstellung, da sie eine Verdrehsicherung 20 zwischen der Rückstellfeder 15 und der Nabe 9 sicherstellen. Dabei greifen zumindest drei der Nieten 10 exakt zwischen je zwei radial nach außen ragende Laschen 21 der Rückstellfeder 15, um eine Flankenzentrierung zu realisieren. In der vorliegenden Ausführungsform sind sechs solch spezielle Nieten 10 eingesetzt, die jene besagte Flankenzentrierung nach sich ziehen.

In Fig. 3 ist zusätzlich zur Trennkupplung 1 auch noch ein geeignetes Einrücksystem 22 dargestellt. Dieses Einrücksystem 22 kann einen Kolben 23 einsetzen, der auf eine Shim 24 zur Paarung der Einbaulage der Trennkupplung 1 mit der Einbaulage des Einrücksystems 22 einsetzt. Vom Kolben 23 wird über die Shim 24 ein Betätigungslager 25 axial verlagert, wobei das Betätigungslager 25 dann auf das Anpresselement 12 axial verlagert eingreift. Wird dann der Lüftweg 13 überwunden, gelangt ein aus den Reibscheiben 4 und Gegenreibscheiben 6 zusammengesetztes Lamellenpaket 26 in einen Zustand, in dem es Drehmoment übertragen kann. Der Lüftweg 13 stellt sich ein, wenn die Trennkupplung 1 sich, wie in Fig. 3 dargestellt, im eingestellten Zustand befindet.

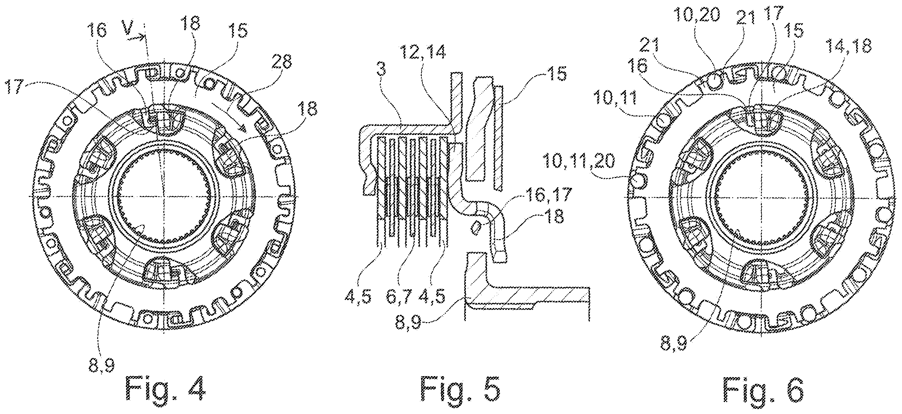

Während in den Fign. 4 und 5 die Rückstellfeder 15 noch nicht in Formschluss, insbesondere in Anlage mit dem Drucktopf 14 im Bereich der Haken 17, steht, ist in Fig. 6 bereits die Rückstellfeder 15 in ihre Betriebsposition verdreht und der Haken 17 am freien Ende des integralen Abschnitts 16 der Rückstellfeder 15 im Hintergriff mit einem Drucktopffuß / einer Drucktopflasche 18 des Drucktopfes 14. Dieser Zustand wurde erreicht, indem die Rückstellfeder in Richtung des Pfeiles 28 verdreht wurde.

Betrachtet man die Fig. 6, so fällt auf, dass nur jeder zweite Niet, in Umfangsrichtung gesehen, die Verdrehsicherung 20 realisiert, wohingegen jeder erste Niet 10 lediglich zur Befestigung des Außenlamellenträgers 3 mit dem Drehmomentweitergabebauteil 8 dient.

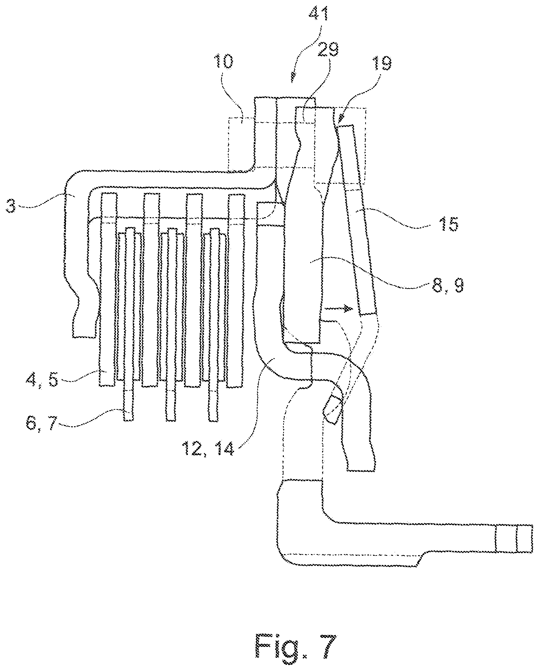

In Fig. 7 ist der Drucktopf 14 in Anlage an der Nabe 9. Der Auflagebereich 19 wird dabei von einem Auflagenocken 29 gestellt. Der in der Fig. 7 dargestellte Zustand, stellt sich lediglich vor dem Betrieb, im Zustand eines Transportes ein, nämlich dann, wenn eine Transportsicherung realisiert ist. Die Rückstellfeder 15 stellt sich dabei soweit auf, dass der Drucktopf 14 an der Nabe 9 anliegt. Sie ist aber auch in diesem Zustand nicht komplett kraftlos. Im Betrieb soll jedoch gerade keine Anlage des Drucktopfes 14 an der Nabe 9 auftreten, weshalb die Vorspannung der Rückstellfeder 15 geschickt im Voraus gewählt sein sollte. Dazu empfiehlt es sich, dass die Kraft der Rückstellfeder nach dem Einstellen des Lüftweges 13 anpassbar ist. Die Wege sind dabei so gewählt, dass die Rückstellfeder 15 immer unter Vorspannung, selbst im Transportzustand, steht.

In Fig. 8 ist, wie bereits erläutert, der konstant zu haltende Lüftweg 13 visualisiert, wobei jedoch zur Verdeutlichung der Notwendigkeit einer Lageausrichtung der Rückstellfeder 15 eine Verbiegung des Auflagenockens 29 um einen bei der Einstellung zurückgelegten Verbiegeweg 30 dargestellt ist. Der Auflagenocken 29 kann einteilig mit dem Drehmomentweitergabebeuteil 8 ausgestaltet sein oder als separates Teil an diesem angebunden sein.

Darüber hinaus kann einerseits bei einer einteiligen Ausgestaltung der Auflagenocken 29 selber während des Einstellvorganges in seiner axialen Position verändert werden oder aber ein an der Nabe befestigtes Verlagerungsteil bei mehrteiliger Ausführungsform in seiner axialen Position verändert werden.

Dieser Verbiegeweg 30 ermöglicht nach einem Einsatz von Shims 24 (siehe Fig. 9), eine Einstellung der Rückstellkraft der Rückstellfeder 15. Durch Verbiegen wird hier eine eingeengte Toleranz bezogen auf die Rückstellkraft erreicht. Eine Höhendifferenz 31 wird durch den Einsatz von Shims 24, also unter Hervorrufen einer "Shimung". Toleranzen werden dadurch ausgeglichen.

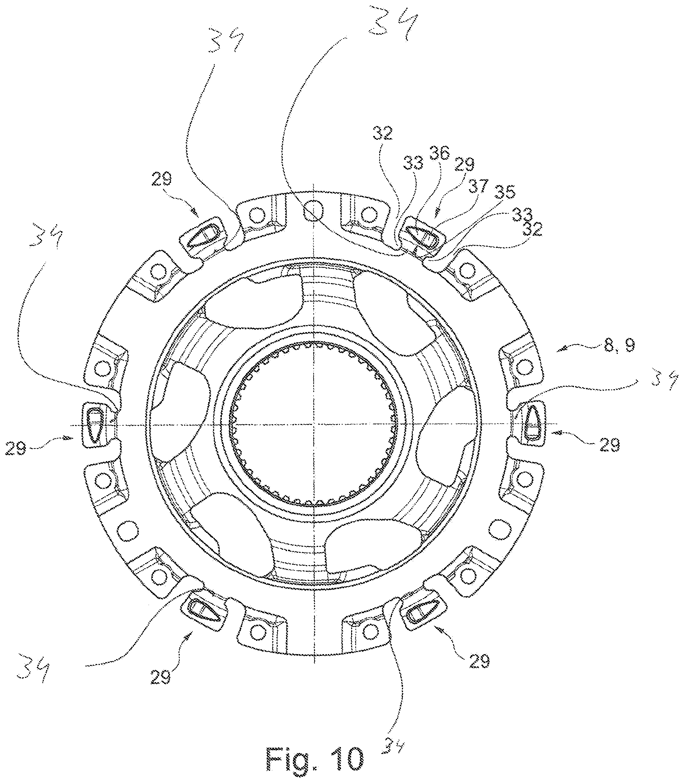

In der singulären Darstellung der Nabe 9 in Fig. 10, ist das Vorhandensein von sechs freigestellten Auflagenocken 29 zu erkennen. Jeder Auflagenocken 29 wird durch zwei Ausnehmungen 32 begrenzt. Innenseitige Enden von zwei einen Auflagenocken 29 benachbarten Ausnehmungen 32, verlaufen aufeinander zu. Sie definieren einen Verbiegebereich 34. Fährt eine Matrize nach dem Durchführen der "Shimung", also dem Ausgleich von Axialversatzen, bedingt durch Toleranzen, auf den Auflagenocken 29, so kann in eine Richtung eine Verbiegung erzwungen werden, um eine Lagekorrektur an der Rückstellfeder 15 vorzunehmen. Für das Eindrehen der Rückstellfeder 15 in ihre Endposition, ist es von Vorteil, wenn auf dem Auflagenocken 29 ein Keil vorhanden ist, der eine Rampe 36 besitzt, die in ein Plateau 37 übergeht. Dies ist der Präzision der Kupplung zuträglich, da genau auf dem Plateau 37 jene Lasche 21 der Rückstellfeder 15 in Anlage gelangt, um die Axialposition exakt zu bestimmen.

### Bezugszeichenliste

- 1: Trennkupplung
- 2: Lamellenkupplung
- 3: Außenlamellenträger
- 4: Reibscheibe
- 5: Stahllamelle
- 6: Gegenreibscheibe
- 7: Belaglamelle
- 8: Drehmomentweitergabebauteil
- 9: Nabe
- 10: Niet
- 11: Vernietung
- 12: Anpresselement / Aktivierungselement
- 13: Lüftweg
- 14: Drucktopf
- 15: Rückstellfeder
- 16: integraler Abschnitt
- 17: Haken
- 18: Drucktopffuß / Drucktopflasche
- 19: Auflagebereich
- 20: Verdrehsicherung
- 21: Lasche / Lappen
- 22: Einrücksystem
- 23: Kolben
- 24: Shim
- 25: Betätigungslager
- 26: Lamellenpaket
- 27: Koppelbauteil
- 28: Verdrehrichtung
- 29: Auflagenocken
- 30: Verbiegeweg
- 31: Höhendifferenz
- 32: Ausnehmung
- 33: innenseitiges Ende
- 34: Verbiegebereich
- 35: Keil
- 36: Rampe
- 37: Plateau

## Patentansprüche

1. Trennkupplung (1) für einen Antriebsstrang eines Kraftfahrzeugs, mit einem Außenlamellenträger (3), in dem drehfest aber axial verlagerbare Reibscheiben (4) einlegbar sind, welche bei Kraftschluss mit Gegenreibscheiben (6) zum Drehmomentweitergeben vorbereitet sind, wobei der Außenlamellenträger (3) dreh- und axialfest an einem Drehmomentweitergabebauteil (8) befestigt ist, wobei ein Anpresselement (12) zum Axialverschieben wenigstens einer der Reibscheiben (4) für den Kraftschlussfall vorhanden ist, wobei das Anpresselement (12) mit einer Rückstellfeder (15) in Kontakt steht, die zum Aufheben des Kraftschlusses vorgesehen ist, wobei die Rückstellfeder (15) radial außen in einem Auflagebereich (19) des Drehmomentweitergabebauteils (8) anliegt, wobei der Auflagebereich (19) zur Veränderung der Vorspannung der Rückstellfeder (15) ausgelegt ist, wobei der Auflagebereich (19) von einem radial nach außen abstehenden Auflagenocken (29) gestellt ist, der zum umformenden Verlagern bei einem Einstellvorgang der Federrückstellkraft der Rückstellfeder (15) vorbereitet ist oder der Auflagenocken (29) zur Aufnahme einer Shim (24) vorbereitet ist, **dadurch gekennzeichnet, dass** der Auflagenocken in Umfangsrichtung an mindestens eine Ausnehmung (32) oder zwei Ausnehmungen (32) im Material des als Nabe (9) ausgebildeten Drehmomentweitergabebauteils (8) grenzt.

2. Trennkupplung (1) nach Anspruch 1, **dadurch gekennzeichnet, dass** im Fall von mindestens zwei Ausnehmungen die Ausnehmungen (32) an deren radial innenseitigen Enden aufeinander zu ausgerichtet sind.

3. Trennkupplung (1) nach Anspruch 2, **dadurch gekennzeichnet, dass** die innenseitigen Enden einen Verbiegebereich (34) des Auflagenockens (29) vordefinieren.

4. Trennkupplung (1) nach einem der vorherigen Ansprüche, **dadurch gekennzeichnet, dass** der Auflagebereich (19) einteilig oder mehrteilig ausgebildet ist.

5. Antriebsstrang eines Kraftfahrzeugs, bei dem eine Trennkupplung (1) nach einem der vorhergehenden Ansprüche zwischen zwei Elektromotoren eingesetzt ist.

6. Verfahren zum Einstellen der Federkraft einer Rückstellfeder (15) einer Trennkupplung (1) nach einem der Ansprüche 1 bis 4, wobei nach einem Einstellen des Lüftweges (13) der Trennkupplung (1) ein radial außenseitiger Kraftübertragungsbereich zwischen einem Drehmomentweitergabebauteil (8) und der Rückstellfeder (15) axial verlagert wird.

7. Verfahren nach Anspruch 6, **dadurch gekennzeichnet, dass** die axiale Verlagerung vor dem Betrieb durch Verbiegen eines Auflagenockens (29) bewirkt wird oder durch Zwischenschalten einer Shim (24) zwischen dem Auflagenocken (29) und der Rückstellfeder (15) bewirkt wird.

## Claims

1. A disconnect clutch (1) for a drive train of a motor vehicle, said clutch comprising an outer disc carrier (3) in which rotationally fixed but axially displaceable friction discs (4) can be inserted, which discs are provided to transfer torque in frictional connection with counter friction discs (6), said outer disc carrier (3) being rotationally and axially fixed on a torque transfer component (8), wherein an application element (12) is provided to axially displace at least one of the friction discs (4) in the case of a frictional connection, said application element (12) being in contact with a return spring (15) which is provided to release the frictional connection, the return spring (15) lying in a radially outer portion against a contact region (19) of the torque transfer component (8), said contact region (19) being designed to modify the preload of the return spring (15), wherein the contact region (19) is provided by a radially outward projecting support cam (29), which is provided for deforming displacement during an adjustment process of the return spring force of the return spring (15) or the support cam (29) is provided to receive a shim (24), **characterised in that** the support cam borders, in the circumferential direction, at least one recess (32) or two recesses (32) in the material of the torque transfer component (8) designed as a hub (9).

2. The disconnect clutch (1) according to claim 1, **characterised in that** in the case of at least two recesses, the recesses (32) are oriented towards one another at their radially inner ends.

3. The disconnect clutch (1) according to claim 2, **characterised in that** the inner ends predefine a bending region (34) of the support cams (29).

4. The disconnect clutch (1) according to one of the preceding claims, **characterised in that** the contact region (19) is formed in one part or in several parts.

5. A drive train of a motor vehicle, in which a disconnect clutch (1) according to one of the preceding claims is inserted between two electric motors.

6. A method for adjusting the spring force of a return spring (15) of a disconnect clutch (1) according to one of claims 1 to 4, wherein, after adjusting the air gap (13) of the disconnect clutch (1), a radially outer force transmission region between a torque transfer component (8) and the return spring (15) is axially displaced.

7. The method according to claim 6, **characterised in that** the axial displacement is brought about, before the operation, by bending a support cam (29) or is brought about by interposing a shim (24) between the support cam (29) and the return spring (15).

## Revendications

1. Embrayage de coupure (1) pour une chaîne cinématique d'un véhicule automobile, comprenant un support de disques extérieur (3), dans lequel peuvent être insérées des rondelles de friction (4) solidaires en rotation mais déplaçables axialement, qui sont préparées pour la transmission du couple de rotation en cas d'adhérence avec des contre-rondelles de friction (6), le support de disques extérieur (3) étant fixé solidaire en rotation et axialement à une pièce de transmission de couple (8), un élément de pression (12) servant au déplacement axial d'au moins une des rondelles de friction (4) en cas d'adhérence, l'élément de pression (12) étant en contact avec un ressort de rappel (15) qui sert à supprimer l'adhérence, le ressort de rappel (15) venant en appui radialement à l'extérieur dans une zone d'appui (19) de la pièce de transmission de couple (8), la zone d'appui (19) étant conçue pour modifier la précontrainte du ressort de rappel (15), la zone d'appui (19) étant placée par une came d'appui (29) faisant saillie radialement vers l'extérieur, qui est préparée pour le déplacement par déformation lors d'un processus de réglage de la force de tension du ressort de rappel (15) ou la came d'appui (29) étant préparée pour recevoir une rondelle d'épaisseur (24), **caractérisé en ce que** la came d'appui est adjacente dans la direction circonférentielle à au moins un évidement (32) ou à deux évidements (32) dans le matériau de la pièce de transmission de couple (8) réalisée sous forme de moyeu (9).

2. Embrayage de coupure (1) selon la revendication 1, **caractérisé en ce que,** dans le cas d'au moins deux évidements, les évidements (32) sont disposés les uns sur les autres au niveau de leurs extrémités radialement intérieures.

3. Embrayage de coupure (1) selon la revendication 2, **caractérisé en ce que** les extrémités côté intérieur prédéfinissent une zone de flexion (34) de la came d'appui (29).

4. Embrayage de coupure (1) selon l'une quelconque des revendications précédentes, **caractérisé en ce que** la zone de flexion (19) est conçue d'un seul tenant ou en plusieurs parties.

5. Chaîne cinématique d'un véhicule automobile, dans laquelle un embrayage de coupure (1) selon l'une quelconque des revendications précédentes est placé entre deux moteurs électriques.

6. Procédé de réglage de la force de tension d'un ressort de rappel (15) d'un embrayage de coupure (1) selon l'une des revendications 1 à 4, dans lequel, après un réglage de l'entrefer (13) de l'embrayage de coupure (1), une zone de transmission de force située radialement à l'extérieur entre une pièce de transmission de couple (8) et le ressort de rappel (15) est déplacée axialement.

7. Procédé selon la revendication 6, **caractérisé en ce que** le déplacement axial est obtenu avant le fonctionnement par la flexion d'une came d'appui (29) ou est obtenu par l'intercalation d'une rondelle d'épaisseur (24) entre la came d'appui (29) et le ressort de rappel (15).
